(19) Europäisches Patentamt
European Patent Office
Office européen des brevets

(11) EP 1 873 224 A1

(12) EUROPEAN PATENT APPLICATION

(43) Date of publication:
**02.01.2008 Bulletin 2008/01**

(51) Int Cl.:
***C09K 5/20*** *(2006.01)* ***C23F 11/12*** *(2006.01)*

(21) Application number: **07111319.5**

(22) Date of filing: **28.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **29.06.2006 US 817311 P**

(71) Applicant: **SHELL INTERNATIONALE RESEARCH MAATSCHAPPIJ B.V.**
**2596 HR Den Haag (NL)**

(72) Inventors:
- **Alverson, Frederick Collins**
  **Katy, TX 77450 (US)**
- **Skrobul, Anthony Paul**
  **Katy, TX 77450 (US)**

(74) Representative: **Zeestraten, Albertus W. J.**
**Shell International B.V.,**
**Intellectual Property Services,**
**P.O. Box 384**
**2501 CJ The Hague (NL)**

(54) **Additive combinations, antifreeze concentrates, coolant compositions and method for using same to provide corrosion and oxidation inhibition at high temperatures**

(57) Additive combination, antifreeze concentrate, coolant composition, and methods of using same to inhibit metal corrosion and oxidation at temperatures of 135°C (275 °F) or more.

EP 1 873 224 A1

## Description

### Field of the Invention

The present invention relates to additive combinations, antifreeze concentrates, and coolant compositions, and methods for using same to provide corrosion and oxidation inhibition at high temperatures.

### Background of the Invention

Internal-combustion engines generally have a fluid heat exchange system to cool the engine during operation. Coolant compositions used in the fluid heat exchange system often include an amount of anti-freeze concentrate to prevent the fluid from freezing at low temperatures. Antifreeze concentrates generally include one or more glycols and/or one or more alcohols as a base to lower the freezing point of the coolant composition. Coolant compositions also typically include a metal corrosion inhibitor to slow or inhibit corrosion of the metals contacted by the fluid.

Until recently, the metal corrosion inhibitors were required to prevent metal corrosion and oxidation only under relatively mild operating conditions. For example, the test temperature specified in ASTM D1384-05 Standard Test Method for Corrosion Test for Engine Coolants in Glassware is only about 88 °C (190 °F).

The trend is toward smaller, lighter engines with higher power outputs. The coolants used in these engines generally are exposed to more severe operating conditions, including higher temperatures. Emission reduction technologies added to heavy duty engines (exhaust gas re-circulation [EGR] and other technologies) also place greater demands on the coolant for improved oxidation and thermal stability and high temperature aluminum and iron corrosion protection.

U.S. Patent No. 6,676,847 teaches a coolant composition comprising a molybdate, a triazole, and a monocarboxylic acid, but teaches that aliphatic monocarboxylic acids should be used instead of aromatic monocarboxylic acids. Despite the teachings of the '847 patent, next generation coolant compositions with improved high temperature corrosion protection and oxidation resistance are needed for use in light duty and heavy duty applications.

### Summary of the Invention

The present application provides an additive combination for an antifreeze concentrate that inhibits metal corrosion and oxidation even at temperatures of 135°C (275°F) or more.

The application provides an additive combination for an antifreeze concentrate, the additive combination comprising hydrocarbyl triazole, an amount of molybdate, and a quantity of organic acid consisting essentially of one or more monocarboxylic aromatic acid.

In one embodiment, the application provides an antifreeze concentrate comprising alkylene glycol and an additive combination comprising hydrocarbyl triazole, an amount of molybdate, and a quantity of organic acid consisting essentially of one or more monocarboxylic aromatic acid.

In another embodiment, the application provides an antifreeze concentrate comprising: a base comprising alkylene glycol; and, an additive combination comprising: from about 0.2 wt.% to about 0.4 wt.% hydrocarbyl triazole; from about 2 wt.% to about 6 wt.% organic acid consisting essentially of one or more monocarboxylic aromatic acids; and, from about 400 ppm to about 6600 ppm Mo anion.

In another embodiment, the application provides an antifreeze concentrate comprising: a base comprising alkylene glycol; and, an additive combination comprising: from about 0.2 wt.% to about 0.4 wt.% tolyltriazole; from about 2 wt.% to about 6 wt.% monocarboxylic aromatic acid selected from the group consisting of benzoic acid, p-toluic acid, p-t-butylbenzoic acid, salts thereof, and combinations thereof; and, from about 400 ppm to about 6600 ppm Mo anion.

In another embodiment, the application provides a method for inhibiting corrosion and oxidation in a heat transfer system comprising: providing the heat transfer system with a quantity of antifreeze concentrate comprising alkylene glycol, hydrocarbyl triazole, and organic acid consisting essentially of one or more monocarboxylic aromatic acids; wherein operation of the heat transfer system using the antifreeze concentrate at a 50/50 dilution with deionized water for a period of 168 hours at 135°C (275 °F) provides (a) oxidation inhibition evidenced by production of a used coolant composition comprising 10,000 ppm or less glycolates and 2000 ppm or less formates, and (b) corrosion inhibition evidenced by a maximum weight loss of 100 mg or less for metals present in the heat transfer system selected from the group consisting of copper, solder, brass, steel, cast iron, cast aluminum, and combinations thereof.

### Detailed Description

Coolant compositions comprising an additive combination comprising hydrocarbyl triazole and organic acid consisting essentially of one or more monocarboxylic acids achieve excellent corrosion and oxidation inhibition at temperatures of 135°C (275 °F) or more. The addition of one or more molybdates, either alone or in combination with one

or more nitrates, produces used coolant composition that is clear and golden yellow with very little precipitate even at temperatures as high as 150 °C (302 °F).

The foregoing contrasts with the teachings of U.S. Patent No. 5,811,025 ("the '025 patent"). The '025 patent describes coolant compositions including (a) an alkylbenzoic acid or acids of the chemical structure

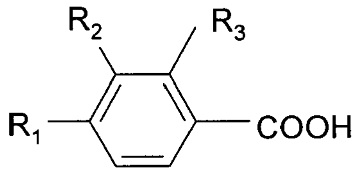

(wherein, one of R1, R2, and R3 is an alkyl group of C1-C4, the remaining two are hydrogen atoms; R1 is not a tert-butyl group), or an alkali metal, ammonium, or amine salt or salts thereof, (b) a hydrocarbon triazole, and (c) an alkali metal nitrate, as well as water and a glycol or glycols. Col. 2,1. 65 - col. 3,1. 12. Table II in the '025 patent indicates that cast iron/steel were locally corroded in the sample using sodium benzoate (Comparative Example 1), and cast aluminum was locally corroded in the sample using p-t-butylbenzoic acid (Comparative Example 3).

The present application provides evidence that benzoic acid and p-t-butylbenzoic acid, combined with hydrocarbyl triazole, achieve excellent corrosion and oxidation inhibition at temperatures of 135°C (275 °F) or more.

## The Anti-Freeze Concentrate

The present application provides anti-freeze concentrates that generally comprise one or more alkylene glycol as a base. A wide variety of alkylene glycols may be used. Examples of suitable alkylene glycols, include, for example, glycol ethers, ethylene glycol, propylene glycol, 1,3-butylene glycol, hexylene glycol, glycerin, diethylene glycol, dipropylene glycol, triethylene glycol, and mixtures thereof. An advantageous alkylene glycol comprises ethylene glycol.

The anti-freeze concentrate generally comprises about 80 wt.% or more alkylene glycol, based on the weight of the anti-freeze concentrate. In an advantageous embodiment, the antifreeze concentrate comprises about 90 wt.% or more alkylene glycol. In another advantageous embodiment, the antifreeze concentrate comprises about 95 wt.% or more alkylene glycol.

## The Additive Combination

The additive combination used in the antifreeze concentrate comprises hydrocarbyl triazole and organic acid consisting essentially of one or more monocarboxylic aromatic acids. In an advantageous embodiment, the additive combination further comprises molybdate.

## The Monocarboxylic Aromatic Acid

Suitable monocarboxylic aromatic acids for use in the additive combination have the following general structure:

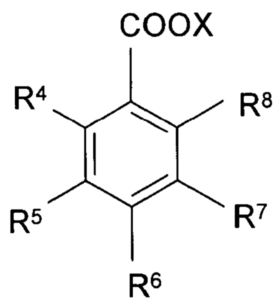

wherein

$R^4$, $R^5$, $R^6$, $R^7$, and $R^8$ are selected from the group consisting of hydrogen, alkyl groups having from 1 to 5 carbon atoms, halogen atoms other than fluorine, and electron withdrawing groups, provided that

no more than 2 of $R^4$, $R^5$, $R^6$, $R^7$ and $R^8$ are other than hydrogen atoms; and,

X is selected from the group consisting of a hydrogen ion, an alkali metal ion, an ammonium ion, and an alkaline earth metal ion.

In one embodiment, $R^6$ is selected from the group consisting of hydrogen and alkyl groups having from 1 to 5 carbon atoms, and $R^4$, $R^5$, $R^7$, and $R^8$ are selected from the group consisting of hydrogen and electron withdrawing groups other than fluorine, provided that no more than 2 of $R^4$, $R^5$, $R^7$, and $R^8$ are other than hydrogen atoms. In an advantageous embodiment, X is a hydrogen ion. In another advantageous embodiment, X is a sodium ion. In another advantageous embodiment, X is a potassium ion.

In one embodiment, $R^6$ is selected from the group consisting of hydrogen, methyl groups, t-butyl groups, and combinations thereof; and, $R^4$, $R^5$, $R^7$, and $R^8$ are hydrogen atoms.

In one embodiment, $R^4$, $R^5$, $R^6$, $R^7$, and $R^8$ are hydrogen atoms. In another embodiment, $R^6$ is a methyl group and $R^4$, $R^5$, $R^7$, and $R^8$ are hydrogen atoms. In yet another embodiment, $R^6$ is a t-butyl group and $R^4$, $R^5$, $R^7$, and $R^8$ are hydrogen atoms.

The overall amount of monocarboxylic aromatic acid in the anti-freeze concentrate is as low as possible while still providing sufficient oxidation and corrosion resistance.

The amount of monocarboxylic acid typically is from about 2.0 wt.% to about 6.0 wt.%, based on the weight of the antifreeze concentrate. Optimal total amounts of the monocarboxylic aromatic acid which balance performance with formulation costs are from about 3 wt.% to about 5 wt.%, based on the weight of the antifreeze concentrate. In an advantageous embodiment, the anti-freeze concentrate comprises about 4 wt.% monocarboxylic acid(s), based on the weight of the antifreeze concentrate.

The amount of monocarboxylic aromatic acid in the anti-freeze concentrate is determined by the amount of calculated monocarboxylic aromatic acid contained in the anti-freeze concentrate in its free acid state. Without being bound by theory, it is believed that the monocarboxylic aromatic acid anion either forms a passivation layer on metal surfaces or structurally alters metal surfaces, especially aluminum surfaces.

The use of the phrase "consisting essentially of" in referring to monocarboxylic aromatic acids is not intended to exclude trace amounts of organic aromatic acids other than monocarboxylic aromatic acids. The phrase "trace amounts" generally refers to about 1 wt.% or less of acids such as multicarboxylic aromatic acids.

## The Molybdate

In an advantageous embodiment, the additive combination further comprises one or more molybdates. Suitable molybdates are salts of the structure:

$$MoO_4^{2-}$$

wherein the cation(s) are selected from the group consisting of alkali metal ions, alkaline earth metal ions, and ammonium ions.

Ammonium molybdates include, for example, ammonium dimolybdate and ammonium heptamolybdate. Alkali metal molydbates include, for example, sodium molybdate, sodium molybdate dihydrate, molybdenum trioxide, heteropolymolybdates, and potassium molybdates. Alkaline earth metal molybdates include, for example, calcium molybdates, barium molybdates, and strontium molybdates. Advantageous molybdates include, for example, sodium molybdate, potassium molybdate, lithium molybdate and ammonium molybdates.

The amount of molybdate, if any, is as low as possible to provide sufficient protection. Where used, the anti-freeze concentrate advantageously comprises an amount of molybdate effective to provide about 400 ppm Mo anion or more. In one embodiment, the concentrate comprises an amount of molybdate effective to provide about 700 ppm Mo anion or more. In another embodiment, the concentrate comprises an amount of molybdate effective to provide about 750 ppm Mo anion or more. In an advantageous embodiment, the concentrate comprises an amount of molybdate effective to provide about 790 ppm Mo anion or more. The amount of molybdate advantageously comprises about 6600 ppm or less Mo anion. In one embodiment, the concentrate comprises about 4000 ppm Mo anion or less. In an advantageous embodiment, the concentrate comprises about 2000 ppm Mo anion or less. In an advantageous embodiment, the concentrate comprises about 1200 ppm Mo anion or less.

In one embodiment, the concentrate comprises from about 0.2 wt.% to about 1 wt.% sodium molybdate dihydrate, based on the weight of the anti-freeze concentrate. In an advantageous embodiment, the concentrate comprises from about 0.2 wt.% to about 0.3 wt.% sodium molybdate dihydrate, based on the weight of the anti-freeze concentrate.

**Hydrocarbyl triazoles and/or thiazoles**

The additive combination also generally comprises one or more hydrocarbyl triazoles and/or hydrocarbyl thiazoles. Hydrocarbyl triazoles and/or thiazoles generally protect against corrosion of brass and copper.
Suitable hydrocarbyl triazoles have the following general structure:

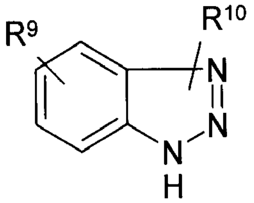

and, suitable hydrocarbyl thiazoles have the following general structure:

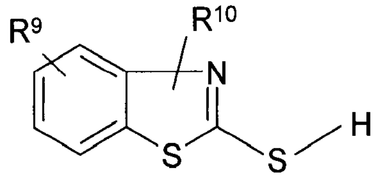

wherein $R^9$ and $R^{10}$ independently are selected from the group consisting of hydrogen, alkyl groups having from 1 to 8 carbon atoms, amino groups, acyl groups, and phenyl groups. Examples of suitable amino groups include groups having the formula -NH, $NHR^9$, and $NP^9R^{10}$. Examples of suitable acyl groups include groups having the structure $COR^{10}$. Examples of suitable phenyl groups include benzyl groups and tolyl groups.
Suitable amounts of the triazoles and/or thiazoles range from about 0.07 wt.% to about 0.5 wt.%, based on the weight of the anti-freeze concentrate. In one embodiment, the amount of triazole and/or thiazole is from about 0.2 wt.% to about 0.4 wt.%, based on the weight of the anti-freeze concentrate. An advantageous embodiment comprises from about 0.3 wt.% to about 0.4 wt.% tolyltriazole, based on the weight of the anti-freeze concentrate. A particularly advantageous embodiment comprises about 0.4 wt.% tolyltriazole, based on the weight of the anti-freeze concentrate.

**Aqueous base**

To enhance corrosion protection, the pH of the anti-freeze concentrate and coolant composition is controlled to from about 7 to about 10, as measured using a standardized pH meter according to ASTM D 1287, using a sample comprising (a) from about 33 vol.% to about 50 vol.% antifreeze concentrate, and (b) from about 67 vol.% to about 50 vol.% dilution water, respectively. In an advantageous embodiment, the pH is controlled to from about 7 to about 9.5. In a particularly advantageous embodiment, the pH is controlled to from about 8 to about 9.0.
To provide the desired pH level, one or more aqueous base generally is added to the anti-freeze concentrate. Suitable bases include, for example, alkali metal bases. Advantageous alkali metal bases are alkali metal hydroxides. Advantageous alkali metal hydroxides include, for example, sodium and/or potassium hydroxide. A particularly advantageous aqueous base is potassium hydroxide.
The anti-freeze concentrate generally comprises from about 2 wt.% to about 7 wt.% of a solution of aqueous alkali metal base, based on the weight of the anti-freeze concentrate. The solution of alkali metal base typically comprises from about 30 to about 50 wt.% alkali metal base, based on the total weight of the water and alkali metal base. In an advantageous embodiment, potassium hydroxide is the aqueous base, and the solution comprises about 45 wt.% potassium hydroxide, based on the total weight of the water and the potassium hydroxide.

**Other Components**

Other components that can be added to the anti-freeze concentrate include antifoamers such as non-ionic surfactants, bittering agents, dyestuffs, hard water stability agents, and the like. The amount of any optional ingredient (s) should not exceed a point where the anti-freeze concentrate fails any one of the ASTM tests for analyzing anti-freeze

compositions.

Suitable antifoam agents include non-silicate silicone emulsions, polyglycols, and non-ionic surfactants. In one embodiment, the antifoam agent is a non-ionic surfactant. An advantageous commercially available antifoam agent is PLURONIC® L61, which is a non-ionic surfactant commercially available from BASF Corporation.

Suitable bittering agents generally comprise denatonium benzoate as active ingredient, and are available from a variety of commercial sources. Examples include BITTER-IT, commercially available from Wincom Inc.; BITREX®, commercially available from Macfarlan Smith; and ReJeX-iT®, commercially available from PMC Specialties Group, Inc.

Suitable dyestuffs are available from a variety of commercial sources. An example is CHROMATINT® ORANGE X-0712, a coloring composition commercially available from Chromatech Inc. Another example is KEYACID RODAMINE WT LIQUID, a fluorescent red dye commercially available from Keystone Aniline Corporation.

A variety of hard water stability agents are available from a variety of commercial sources. Examples of suitable hard water stability agents include polyvinylpyrrolidone and phosphonocarboxylic copolymers. An example of a suitable commercially available polyvinylpyrrolidone is LUVITEC® K90, which is commercially available from BASF Corporation. An example of suitable phosphonocarboxylic copolymers is BELCLEAN® 494, which is commercially available from Bio-Lab, Inc.

The anti-freeze concentrate may optionally contain nitrites. In heavy duty applications, such as diesel and tractor engines, the anti-freeze concentrate may contain nitrites to provide wet sleeve liner protection against pitting. In an advantageous embodiment, the antifreeze concentrate is free of amines and the formation of nitrosoamines is avoided. In light duty formulations, the preferred anti-freeze concentrate is nitrite free. Where nitrite(s) are used, the amount of nitrites added is about 7,500 ppm or less, or about 1.0 wt. % or less.

Nitrates also are optional in the anti-freeze concentrate. In one advantageous embodiment, the anti-freeze concentrate is free of nitrates. In another advantageous embodiment, the anti-freeze concentrate comprises nitrates. Where used, suitable nitrates include, for example alkali metal nitrates. Examples are sodium and potassium nitrates. Nitrates may be used in an amount of about 5000 ppm or less in the anti-freeze concentrate. Typically, nitrates are used at about 0.5 wt. % or less based on the weight of the anti-freeze concentrate.

Water optionally may be added to the anti-freeze concentrate. For reasons relating to convenience in handling and storage, the antifreeze may be formulated as a concentrate containing little or no water. In an advantageous embodiment, the anti-freeze concentrate comprises about 5 wt.% water or less. Typically, the antifreeze concentrate comprises from about 2 wt.% to about 3 wt.% water.

The anti-freeze concentrate typically is diluted with a sufficient amount of water to produce a coolant composition for use in a heat transfer system. The relative amount of water and glycol in the coolant composition is varied to provide the desired combination of heat transfer, freezing point and boiling point properties, and corrosion protection. Where water is added, it is advantageous to add deionized water. In one embodiment, the anti-freeze concentrate is diluted to a solution comprising about 40 vol.% water, based on the total weight of the diluted concentrate. In an advantageous embodiment, the anti-freeze concentrate is diluted with about 60 vol.% water or more, based on the total weight of the diluted concentrate.

In an advantageous embodiment, the antifreeze concentrate/coolant composition does not comprise supplemental additives, defined herein as borates, primary and secondary amines, phosphates, and/or silicates. Although it is advantageous not to use supplemental additives, the anti-freeze concentrate/coolant composition may comprise supplemental additives. For example, in heavy duty applications the additive combination may be depleted over the service life of the coolant composition. In such uses, it may be desirable to add supplemental coolant additives to the coolant composition every 15,000 to 20,000 miles on a periodic basis in order to avoid the need to change out the coolant composition or to use more of the coolant composition.

The anti-freeze concentrate is storage stable and mono-phasic. In shelf life tests of 30 days at 65 °C., the composition remains mono-phasic with no sedimentation or phase separation detectable to the naked eye.

The anti-freeze concentrate/coolant composition may be used to cool any heat exchange system exposed to high and low temperature extremes. In an advantageous embodiment, the heat exchange system cools an internal-combustion engine.

Due to its simplicity, the anti-freeze concentrate is cost effective and environmentally friendly relative to other anti-freeze concentrates containing a variety of other additives. The anti-freeze concentrate also is easy to process and handle.

## The Accelerated Oxidation and Corrosion Test

In order to evaluate whether various additive combinations would provide the needed protection, an "Accelerated Oxidation and Corrosion Test" was developed. The Accelerated Oxidation and Corrosion Test was based on a combination of ASTM D 2272 Standard Test Method for Oxidation Stability of Steam Turbine Oils by Rotating Pressure Vessel and ASTM D 1384 Standard Test Method For Corrosion Test for Engine Coolants in Glassware. For convenience, this

test is referred to as the "AOCT." The AOCT is described in more detail in the Examples, but generally uses a temperature of 135 °C (275 °F) or more.

Using the AOCT, a specimen bundle comprising specimens of copper, solder, brass, steel, cast iron, and cast aluminum, was exposed to coolant compositions comprising either (a) sebacic acid (aliphatic acid), or (b) one of several aromatic acids. As seen in the Examples, a number of the specimens exposed to the coolant composition comprising sebacic acid exhibited more weight loss than the same specimens exposed to coolant composition comprising monocarboxylic aromatic acids.

Specifically, more weight loss was seen in the specimens of copper, solder, brass, cast iron, and cast aluminum when exposed to the coolant composition comprising sebacic acid. The foregoing specimens exhibited relatively less weight loss when exposed to the coolant composition comprising benzoic acid, p-toluic acid, and/or 1,3,5-benzenetricarboxylic acid.

The steel specimen exhibited less weight loss when exposed to the coolant composition comprising sebacic acid. However, the increase in weight loss from the copper, brass, cast iron, and cast aluminum specimens exposed to coolant comprising sebacic acid was greater than the decrease in weight loss from the steel specimen exposed to the coolant comprising sebacic acid.

In other words, during AOCT at 135 °C (275 °F), the monocarboxylic aromatic acids provided better corrosion inhibition for the specimens of copper, brass, cast iron, and cast aluminum than either sebacic acid or multi-carboxylic aromatic acids. When molybdate was used with the monocarboxylic aromatic acids, the additive combination provided excellent oxidation resistance and corrosion protection in the AOCT at 135 °C (275 °F) for all of the metals in a metal specimen bundle, including steel. Reductions in corrosion and oxidation also are expected when molybdenum is combined with individual monocarboxylic acids or with multicarboxylic aromatic acids.

The additive or additive combination is used in the coolant composition in an amount effective to inhibit corrosion and provide oxidation protection. This phrase means that the antifreeze concentrate "passes" the AOCT.

An antifreeze concentrate passes the AOCT if, at a 50/50 dilution with DI water and at 135 °C (275 °F), it produces:

(a) a maximum weight loss of 100 mg or less for all metals in a specimen bundle; and,
(b) 10,000 ppm or less glycolates and 2000 ppm or less formates in the used coolant composition.

In an advantageous embodiment, the antifreeze concentrate produces:

(a) a maximum weight loss of 50 mg or less for all metals in the specimen bundle;
(b) 5000 ppm or less glycolates and 2000 ppm or less formates in the used coolant composition.

In an even more advantageous embodiment, the antifreeze concentrate produces:

(a) a maximum weight loss of 25 mg or less for all metals in the specimen bundle;
(b) 5000 ppm or less glycolates and/or 1500 ppm or less formates in the used coolant composition.

The invention will be better understood with reference to the following examples, which are non-limiting and illustrative only:

## EXAMPLES

### Comparative Example

U.S. Patent No. 5,811,025 ("the '025 patent") describes coolant compositions including (a) an alkylbenzoic acid or acids of the chemical structure

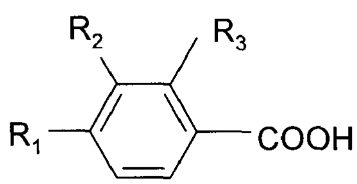

(wherein, one of $R_1$, $R_2$, and $R_3$ is an alkyl group of $C_1$-$C_4$, the remaining two are hydrogen atoms; R1 is not a tert-butyl group), or an alkali metal, ammonium, or amine salt or salts thereof, (b) a hydrocarbon triazole, and (c) an alkali metal nitrate, as well as water and a glycol or glycols. Col. 2, 1. 65 - col. 3,1. 12. The ‘025 patent notes that "the coolant compositions do not include any aliphatic monobasic acids." Col. 2,1. 13.

The ‘025 patent uses sodium benzoate and p-tert butylbenzoic acid in "Comparative Examples." Col. 4, 11. 6-67. As seen from Table I, Comparative Examples 3 and 4 contained 2.5 wt.% and 3.0 wt.% p-t-butylbenzoic acid, respectively. Comparative Examples 1 and 2 contained 3.0 and 3.5 wt.% sodium benzoate, respectively. In the metal corrosion tests, "[e]ach beaker was heated to 88°C (190 °F) and left for 336 hours at that temperature. The weight of each test metal piece was measured before and after each test." Col. 5,11. 29-43.

As seen from Table II, the cast iron/steel were locally corroded in Comparative Example 1 using sodium benzoate. The cast aluminum was locally corroded in Comparative Example 3 using p-t-butylbenzoic acid.

## EXPERIMENTAL PROCEDURE

### Preparation of Sample Coolant Composition

In the following experimental examples, typical antifreeze concentrate sample sizes varied from about 500 g to nearly 20 kg. A suitable blending vessel was selected for each sample. About 2/3 of the ethylene glycol (EG) was charged to the blending vessel, and the remainder was held in reserve to form pre-blends of other components. The blend pot was placed on a hot plate connected to a temperature controller, and a propeller stirrer was lowered into the ethylene glycol. Thermocouple probes were inserted into the ethylene glycol. With continuous agitation, the ethylene glycol was slowly heated to about 48 to 55 °C (120 to 130 °F). The organic acids were added to the respective blend pot and allowed to stir. The potassium hydroxide was added to the blend pot. When the organic acids were completely dissolved, solid tolyltriazole was added to the blend pot. Where used, polyvinylpyrrolidone was added as a pre-blend prepared by dissolving LUVITEC® K90 in EG at about 49 °C (120 °F) with vigorous stirring. The deionized (DI) water was added to the blend pot. Dyes and bittering agent were added as pre-blends made with EG at room temperature. The antifoam also was added as a pre-blend prepared by adding the antifoam to a 300 mL tall-form beaker, adding EG to the 175 mL line, and mixing at room temperature with a hand-held lightning mixer. Any remaining EG was added to the blend pot, and heating and agitation were continued for an additional half hour. The heater and stirrer were shut off and the solution was allowed to cool to room temperature.

### Accelerated Oxidation and Corrosion Test Procedure

The Accelerated Oxidation and Corrosion Test procedure involved placing a 55 mL sample of a coolant composition (50/50 volume% anti-freeze concentrate/DI water) in ASTM D 2272 glassware with a six metal coupon bundle (copper, solder, brass, steel, cast iron and cast aluminum). The coupon bundle was the same as used in ASTM D 1384, except that Teflon spacers electrically isolated each coupon in the bundle. The legs of the bundle also were made of Teflon rather than brass to minimize etching of the glass. The test solutions were prepared with deionized water, rather than the ASTM corrosive water used in D 1384. The metal coupons were prepared, cleaned and weighed before and after the test as specified in ASTM D 1384.

The glassware was placed in the pressure vessel, charged with oxygen to a pressure of 90 psi and rotated axially at 100 rpm at a 30° angle from horizontal in a bath at 121 °C - 150 °C (250 °F - 302 °F) for 168 hours. The volume of fluid (55 mL) was chosen to maximize the amount of fluid in contact with the metal coupons while at the same time preventing overflow of the fluid into the pressure vessel while rotating in the bath. A small upper portion of the metal coupons was exposed to the oxygen rich environment during the test. The corrosion-inhibitive properties of the test solutions were evaluated on the basis of weight changes incurred by the specimens. The oxidation-inhibitive properties of the test solutions were evaluated on the basis of changes in pH, corrosion inhibitor contents, and the presence of glycol degradation acids - glycolates and formates.

During testing at 135 °C (275 °F), monocarboxylic aromatic acids provided greater corrosion inhibition and oxidation control than aliphatic acids.

## EXPERIMENTAL EXAMPLES

### Example 1

Antifreeze concentrates were prepared containing the following organic acids:

Benzoic Acid:

| Concentration (wt.%) | Product Name |
|---|---|
| 90.728 | EG |
| 1.0 | deionized water |
| 4.0 | benzoic acid |
| 4.057 | KOH, 45% (w/w) |
| 0.2 | tolyltriazole |
| 0.015 | PLURONIC® L61 |

P-Toluic Acid:

| Concentration (wt.%) | Product Name |
|---|---|
| 90.127 | EG |
| 1.0 | deionized water |
| 4.0 | p-toluic acid (98%) |
| 3.658 | KOH, 45% (w/w) |
| 0.2 | tolyltriazole |
| 0.015 | PLURONIC® L61 |

1,3,5-Benzene Tricarboxylic Acid:

| Concentration (wt.%) | Product Name |
|---|---|
| 87.843 | EG |
| 1.0 | deionized water |
| 4.0 | 1,3,5-benzene tricarboxylic acid (95%) |
| 6.942 | KOH, 45% (w/w) |
| 0.2 | tolyltriazole |
| 0.015 | PLURONIC® L61 |

Sebacic Acid:

| Concentration (wt.%) | Product Name |
|---|---|
| 89.922 | EG |
| 1.0 | deionized water |
| 4.0 | sebacic acid |
| 4.863 | KOH, 45% (w/w) |

(continued)

| Concentration (wt.%) | Product Name |
|---|---|
| 0.2 | tolyltriazole |
| 0.015 | PLURONIC® L61 |

All anti-freeze concentrates were prepared to produce a given weight of anti-freeze concentrate and all formulations are on a %w/w basis.

The antifreeze concentrates were subjected to the Accelerated Oxidation and Corrosion Test ("AOCT"). The results are given in the following Table:

**Weight Changes (mg) After AOCT**

| 50/50 Dilution in DI Water, 55 mL, 135 °C (275 °F), 90 psi $O_2$, 1 Week | | | | |
|---|---|---|---|---|
| | **Benzoic Acid** | **p-Toluic Acid** | **1,3,5-Benzenetricarboxylic Acid** | **Sebacic Acid** |
| Copper | 47 | 146 | 245 | 373 |
| Solder | 29 | 29 | 19 | 43 |
| Brass | 41 | 72 | 134 | 291 |
| Steel | 22 | 16 | 17 | 0 |
| Cast-Iron | 16 | 47 | 6 | 939 |
| Cast-Aluminum | -1 | 0 | 5 | 90 |

All of the aromatic acids exhibited greater corrosion inhibition than sebacic acid for every metal in the sample other than steel.

**Oxidation Results**

| Test | Benzoic Acid | p-Toluic Acid | 1,3,5-Benzenetricarboxylic Acid | Sebacic Acid |
|---|---|---|---|---|
| Glycolates, ppm | 6,470 | 11,225 | 10,335 | 11,430 |
| Formates, ppm | 1,330 | 2,225 | 2,415 | 3,575 |
| Glycolates and formates are nil in fresh coolant. | | | | |

All of the aromatic acids, and particularly benzoic acid, exhibited greater oxidation resistance than sebacic acid, as evidenced by a lower concentration of glycolates and formates.

**Example 2**

Antifreeze concentrates were prepared containing the following organic acids:

**p-t-Butylbenzoic Acid:**

| Concentration (wt.%) | Product Name |
|---|---|
| 91.948 | EG |

(continued)

| Concentration (wt.%) | Product Name |
|---|---|
| 1.0 | deionized water |
| 4.0 | p-t-butylbenzoic acid (99%) |
| 2.837 | KOH, 45% (w/w) |
| 0.2 | tolyltriazole |
| 0.015 | PLURONIC® L61 |

**Phthalic Acid**:

| Concentration (wt.%) | Product Name |
|---|---|
| 88.904 | EG |
| 1.0 | deionized water |
| 4.0 | phthalic acid (98%) |
| 5.881 | KOH, 45% (w/w) |
| 0.2 | tolyltriazole |
| 0.015 | PLURONIC® L61 |

**Isophthalic Acid:**

| Concentration (wt.%) | Product Name |
|---|---|
| 88.904 | EG |
| 1.0 | deionized water |
| 4.0 | isophthalic acid (99%) |
| 5.881 | KOH, 45% (w/w) |
| 0.2 | tolyltriazole |
| 0.015 | PLURONIC® L61 |

**Terephthalic Acid:**

| Concentration (wt.%) | Product Name |
|---|---|
| 88.904 | EG |
| 1.0 | deionized water |
| 4.0 | terephthalic acid (98%) |
| 5.881 | KOH, 45% (w/w) |
| 0.2 | tolyltriazole |
| 0.015 | PLURONIC®) L61 |

All anti-freeze concentrates were prepared to produce a given weight of anti-freeze concentrate and all formulations are on a %w/w basis. Terephthalic acid was tested, but the only measurement that was made in the terephthalic acid sample was for oxidation resistance.

The antifreeze concentrates were subjected to the AOCT. The results are given in the following Table:

**Weight Changes (mg) After AOCT**

| 50/50 Dilution in DI Water, 55 mL, 135 °C (275 °F), 90 psi $O_2$, 1 Week | | | |
|---|---|---|---|
| | **p-t-Butylbenzoic Acid** | **Phthalic Acid** | **Isophthalic Acid** |
| Copper | 12 | 442 | 419 |
| Solder | 44 | 95 | 64 |
| Brass | 3 | 365 | 189 |
| Steel | 16 | 169 | 5 |
| Cast-Iron | 12 | 986 | 23 |
| Cast-Aluminum | 1 | 24 | 8 |

**AOCT Oxidation Results**

| **Test** | **p-t-Butylbenzoic Acid** | **Phthalic Acid** | **Isophthalic Acid** | **Terephthalic Acid** |
|---|---|---|---|---|
| Glycolates, ppm | 3,420 | 10,115 | 10,685 | 6,780 |
| Formates, ppm | 830 | 2,955 | 2,685 | 1,528 |
| Glycolates and formates are nil in fresh coolant. | | | | |

The p-t-butylbenzoic acid provided greater corrosion inhibition than the phthalic acid and the isophthalic acid. The p-t-butylbenzoic acid provided greater oxidation resistance than the phthalic acid, the isophthalic acid, and the terephthalic acid.

**Example 3**

A series of tests were run at an even higher temperature of 150 °C (302 °F) using an additive combination comprising molybdate and a mixture of the potassium salts of benzoic acid, p-toluic acid and p-t-butylbenzoic acid in a 73.41/19.45/7.14 mole ratio. Coolant A had the following composition:

| **Concentration (wt.%)** | **Product Name** |
|---|---|
| 88.572 | EG |
| 1.0 | deionized water |
| 1.028 | p-toluic acid (98%) |
| 0.494 | p-t-butylbenzoic acid (99%) |
| 3.478 | benzoic acid |
| 4.795 | KOH, 45% (w/w) |
| 0.4 | tolyltriazole |
| 0.015 | PLURONIC® L61 |
| 0.1 | LUVITEC® K90 |

(continued)

| Concentration (wt.%) | Product Name |
|---|---|
| 0.099 | CHROMATINT® ORANGE X-0712 |
| 0.001 | KEYACID RHODAMINE WT LIQUID |
| 0.018 | BITTER-IT 20EG |

Coolant B had the following composition:

| Concentration (wt.%) | Product Name |
|---|---|
| 45.6345 | 1,3 propanediol |
| 48.936 | deionized water |
| 0.53 | p-toluic acid (98%) |
| 0.255 | p-t-butylbenzoic acid (99%) |
| 1.794 | benzoic acid |
| 2.524 | KOH, 45% (w/w) |
| 0.206 | tolyltriazole |
| 0.008 | PLURONIC® L61 |
| 0.052 | LUVITEC® K90 |
| 0.051 | CHROMATINT® ORANGE X-0712 |
| 0.0005 | KEYACID RHODAMINE WT LIQUID |
| 0.009 | BITTER-IT 20EG |

Coolant A contained 5 wt% total aromatic acids and 0.40 wt% tolyltriazole, based on the weight of the antifreeze concentrate. Coolant B was made as a 50/50 mix of 1,3-propanediol with DI water because the 1,3-propanediol could not be prepared as a concentrate with 5 wt.% aromatic organic acids. Coolant B contained approximately 0.2 wt.% tolyltriazole rather than 0.40 wt.%.

Coolant A was evaluated:

(a) alone;
(b) with 0.252 wt.% sodium molybdate (IV) dihydrate, based on the weight of the antifreeze concentrate (producing 1665 ppm
$MoO_4^{-2}$ in the antifreeze concentrate); and,
(c) as a blend with 0.252 wt.% sodium molybdate (IV) dihydrate and 0.055 wt.% sodium nitrate, based on the weight of the antifreeze concentrate (producing 1665 ppm $MoO_4^{-2}$ and 400 ppm $NO_3^-$ in the antifreeze concentrate).

The results are given in the following Tables:

**<u>Weight Changes (mg) After AOCT</u>**

| 50/50 Dilution in DI Water, 55 mL, 150 °C (302 °F), 90 psi $O_2$, 1 Week | | | | |
|---|---|---|---|---|
| | **Coolant A** | **Coolant A + Molybdate** | **Coolant A + Molybdate & Nitrate** | **Coolant B** |
| Copper | 68 | 8 | 8 | 71 |
| Solder | 45 | 20 | 17 | 33 |
| Brass | 114 | 2 | 4 | 90 |

(continued)

| 50/50 Dilution in DI Water, 55 mL, 150 °C (302 °F), 90 psi $O_2$, 1 Week | | | | |
|---|---|---|---|---|
| | **Coolant A** | **Coolant A + Molybdate** | **Coolant A + Molybdate & Nitrate** | **Coolant B** |
| Steel | 170 | 11 | 3 | 62 |
| Cast-Iron | 414 | 13 | 1 | 1,411 |
| Cast-Aluminum | 130 | -3 | -1 | 0 |

**AOCT Oxidation Results**

| Test | Coolant A | Coolant A + Molybdate | Coolant A + Molybdate & Nitrate | Coolant B |
|---|---|---|---|---|
| Glycolates, ppm | * | 2,310 | 2,210 | * |
| Formates, ppm | * | 825 | 430 | * |
| Glycolates and formates are nil in fresh coolant. | | | | |
| * Not determined since end-of-test coolant was very dark with sediment. | | | | |

Addition of a small amount of molybdate, or a mix of molybdate and nitrate, to the mixed organic acids had a beneficial effect on coupon weight change, even at 150 °C (302 °F). The blends with molybdate were clear and golden yellow with very little precipitate. Coolants A and B without molybdate turned dark brown and contained copious amounts of precipitate.

**Example 4**

The AOCT can be used to conduct experimental design studies to formulate coolants. A two-level factorial design was applied to investigate the effect on coolant performance of the concentration of (a) organic acid (OA), and (b) tolyltriazole (TTZ). For this design, the OA was a mix of benzoic acid, p-toluic acid and p-t-butylbenzoic acid in a 73.41/19.45/7.14 mole ratio. The blends contained the following combinations of OA and TTZ in wt.%, based on the weight of the antifreeze concentrate:

| | wt.%OA | wt.%TTZ |
|---|---|---|
| Blend #1 | 4 | 0.20 |
| Blend #2 | 5 | 0.20 |
| Blend #3 | 4 | 0.40 |
| Blend #4 | 5 | 0.40 |

Based on visual analysis of the weight change results we concluded the following:

1. Higher TTZ concentration has a small positive effect on solder.
2. Higher TTZ concentration has a positive effect on brass.
3. Higher OA concentration has a positive effect on steel and cast iron.

The coupon weight change results and oxidation results are given in the following Tables.

**Weight Changes (mg) After AOCT**

| 50/50 Dilution in DI Water, 55 mL, 135 °C (275 °F), 90 psi $O_2$, 1 Week | | | | |
|---|---|---|---|---|
| | Blend #1 | Blend #2 | Blend #3 | Blend #4 |
| Copper | 11 | 21 | 13 | 13 |
| Solder | 20 | 20 | 14 | 10 |
| Brass | 19 | 21 | 5 | 9 |
| Steel | 12 | 0 | 16 | 0 |
| Cast-Iron | 16 | 1 | 13 | 0 |
| Cast-Aluminum | -4 | -8 | -6 | -5 |

**Table 10: AOCT Oxidation Results**

| Test | Blend #1 | Blend #2 | Blend #3 | Blend #4 |
|---|---|---|---|---|
| Glycolates, ppm | 3,197 | 4,926 | 2,942 | 2,946 |
| Formates, ppm | 891 | 1,089 | 861 | 729 |
| Glycolates and formats are nil in fresh coolant. | | | | |

The main effects of OA and TTZ were calculated as follows:

For glycolates:

$$\text{OA effect} = (4926 + 2946)/2 - (3197 + 2942)/2 = +866$$

$$\text{TTZ effect} =(2942 + 2946)/2 - (3197 + 4926)/2= -1118$$

For formates:

$$\text{OA effect} = (1089 + 729)/2 - (891 + 861)/2= +33$$

$$\text{TTZ effect} = (861 + 729)/2 - (891 + 1089)/2 = -195$$

The following conclusions were drawn based on the foregoing calculation of the main effects:

1. Higher TTZ concentration has a positive effect on oxidation performance (fewer glycolates and formates).
2. Higher OA concentration has a negative effect on oxidation performance.

Persons of ordinary skill in the art will recognize that many modifications may be made to the foregoing description. The embodiments described herein are meant to be illustrative only and should not be taken as limiting the invention, which will be defined in the claims.

## Claims

**1.** An additive combination for an antifreeze concentrate, the additive combination comprising hydrocarbyl triazole, an amount of molybdate, and a quantity of organic acid consisting essentially of one or more monocarboxylic aromatic acid.

**2.** The additive combination of claim 1 wherein the monocarboxylic aromatic acid has the following general structure:

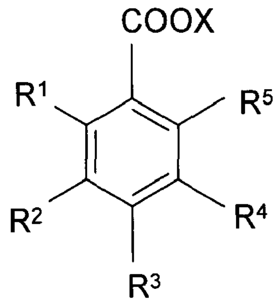

wherein:

X is selected from the group consisting of a hydrogen ion, an alkali metal ion, an ammonium ion, and an alkaline earth metal ion;
$R^3$ is selected from the group consisting of hydrogen and alkyl groups having from about 1 to about 5 carbon atoms; and
$R^1$, $R^2$, $R^4$, and $R^5$ are hydrogen.

**3.** The additive combination of claim 1 wherein the monocarboxylic aromatic acid is selected from the group consisting of benzoic acid, p-toluic acid, p-t-butylbenzoic acid, salts thereof, and combinations thereof.

**4.** The additive combination of claim 1 wherein the monocarboxylic aromatic acid is selected from the group consisting of benzoic acid and salts thereof.

**5.** The additive combination of claim 1 wherein the hydrocarbyl triazole is tolyltriazole.

**6.** The additive combination of claim 1 which is free of borates, primary and secondary amines and salts thereof, phosphates, and silicates.

**7.** An antifreeze concentrate comprising alkylene glycol and an additive combination comprising hydrocarbyl triazole, an amount of molybdate, and a quantity of organic acid consisting essentially of one or more monocarboxylic aromatic acid.

**8.** The antifreeze concentrate of claim 7 wherein the monocarboxylic aromatic acid has the following general structure:

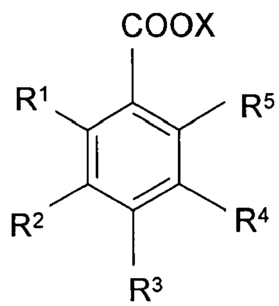

wherein:

X is selected from the group consisting of a hydrogen ion, an alkali metal ion, an ammonium ion, and an alkaline earth metal ion;
$R^3$ is selected from the group consisting of hydrogen and alkyl groups having from about 1 to about 5 carbon atoms; and
$R^1$, $R^2$, $R^4$, and $R^5$ are hydrogen.

9. The antifreeze concentrate of claim 7 wherein the monocarboxylic aromatic acid is selected from the group consisting of benzoic acid, p-toluic acid, p-t-butylbenzoic acid, salts thereof, and combinations thereof.

10. An antifreeze concentrate comprising:

a base comprising alkylene glycol; and,
an additive combination comprising:

from about 0.2 wt.% to about 0.4 wt.% hydrocarbyl triazole;
from about 2 wt.% to about 6 wt.% organic acid consisting essentially of one or more monocarboxylic aromatic acids; and,
from about 400 ppm to about 6600 ppm Mo anion.

European Patent Office

# EUROPEAN SEARCH REPORT

Application Number
EP 07 11 1319

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 827 996 A1 (CCI CO LIMITED [JP] CCI KK [JP]) 11 March 1998 (1998-03-11) * the whole document * ----- | 1-10 | INV. C09K5/20 C23F11/12 |
| X | DATABASE WPI Week 199533 Derwent Publications Ltd., London, GB; AN 1995-252626 XP002448616 & JP 07 157886 A (SEIKEN KAGAKU KOGYO KK) 20 June 1995 (1995-06-20) * abstract * ----- | 1-10 | |
| X | US 4 873 011 A (JUNG IL NAM [KR] ET AL) 10 October 1989 (1989-10-10) * the whole document * ----- | 1-5,7-10 | |
| X | US 5 454 967 A (PFITZNER KLAUS [DE] ET AL) 3 October 1995 (1995-10-03) * claims * ----- | 1-5,7-10 | |
| | | | TECHNICAL FIELDS SEARCHED (IPC) |
| | | | C09K C23F |

The present search report has been drawn up for all claims

| Place of search | Date of completion of the search | Examiner |
|---|---|---|
| The Hague | 3 September 2007 | Puetz, Christine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

4

## ANNEX TO THE EUROPEAN SEARCH REPORT ON EUROPEAN PATENT APPLICATION NO. EP 07 11 1319

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2007

| Patent document cited in search report | Publication date | Patent family member(s) | Publication date |
| --- | --- | --- | --- |
| EP 0827996 A1 | 11-03-1998 | DE 69728335 D1 | 06-05-2004 |
| | | DE 69728335 T2 | 10-02-2005 |
| | | JP 3829171 B2 | 04-10-2006 |
| | | JP 10077466 A | 24-03-1998 |
| | | US 6126851 A | 03-10-2000 |
| JP 7157886 A | 20-06-1995 | NONE | |
| US 4873011 A | 10-10-1989 | DE 3823396 A1 | 10-08-1989 |
| US 5454967 A | 03-10-1995 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6676847 B
- US 5811025 A